# FASCICULE DE BREVET EUROPEEN

(11) **EP 3 707 771 B1**
(45) Date de publication et mention de la délivrance du brevet: **21.06.2023**
(21) Numéro de dépôt: 18842538.3
(22) Date de dépôt: 20.12.2018
(51) Int. Cl.: H01M 10/625, H01M 10/6556

(54) **STRUCTURE POUR LE TRAITEMENT THERMIQUE D'UN DISPOSITIF DE STOCKAGE ELECTRIQUE D'UN VEHICULE AUTOMOBILE**
STRUKTUR ZUR WÄRMEBEHANDLUNG EINER ELEKTRISCHEN SPEICHERVORRICHTUNG FÜR EIN KRAFTFAHRZEUG
STRUCTURE FOR HEAT TREATMENT OF AN ELECTRICAL STORAGE DEVICE FOR A MOTOR VEHICLE

(30) Priorité: 20.12.2017 FR 1762572
(43) Date de publication de la demande: 16.09.2020
(73) Titulaire: Valeo Systemes Thermiques-THS, 78322 Le Mesnil Saint Denis Cedex (FR)
(72) Inventeur: TUDEAU, Eric, 72210 LA SUZE SUR SARTHE (FR); TISON, Frédéric, 72210 LA SUZE SUR SARTHE (FR); MULLER, Jean Damien, 72210 LA SUZE SUR SARTHE (FR); FIGUEIREDO, Antonio, 72210 LA SUZE SUR SARTHE (FR)
(74) Mandataire: Valeo Systèmes Thermiques
(86) Numéro de dépôt international: PCT/FR2018/053450
(87) Numéro de publication internationale: WO 2019/122744

(56) Documents cités:
- WO-A1-2013/139905
- WO-A1-2016/109881
- US-A1- 2017 317 394

## Description

L'invention relève du domaine des systèmes de traitement thermique d'un dispositif de stockage électrique pour véhicule automobile. Elle concerne plus particulièrement les structures destinées au traitement thermique d'un dispositif de stockage électrique de tels systèmes de gestion thermique.

Les véhicules électriques et hybrides sont couramment équipés d'un dispositif de stockage électrique. Un tel dispositif de stockage électrique est constitué d'un assemblage de modules électriques, eux-mêmes constitués d'un assemblage de cellules électrochimiques.

Pour assurer l'autonomie, la performance et la fiabilité d'un tel dispositif de stockage électrique, il convient de traiter thermiquement le dispositif de stockage électrique. Un traitement thermique du dispositif de stockage électrique vise à maintenir la température des modules électriques qui le compose, à une température comprise approximativement entre 20°C et 40°C. En effet, lorsque la température d'un module électrique est trop basse, la capacité de ses cellules électrochimiques diminue et lorsque la température d'un module électrique est trop élevée la durée de vie de ses cellules électrochimiques est dégradée. Pour assurer ce traitement thermique, il est connu d'utiliser un dispositif de traitement thermique comprenant une plaque d'échange de chaleur positionnée directement au contact d'un module électrique du dispositif de stockage électrique et parcourue par un fluide caloporteur.

On connaît des dispositifs de traitement thermique formés par au moins un échangeur de chaleur à plaques placé sous un module électrique pour être en contact direct avec celui-ci. Un tel échangeur de chaleur à plaques est formé par deux tôles métalliques embouties et brasées l'une contre l'autre afin de délimiter entre elles un ou plusieurs circuits formés de canaux d'écoulement d'un fluide caloporteur. Selon le traitement thermique désiré, le fluide parcourant l'échangeur de chaleur à plaques est utilisé, alternativement, pour évacuer des calories émises par le module électrique ou, pour apporter des calories au module électrique. La demande WO2016/109881 porte sur un échangeur de chaleur permettant la gestion thermique d'unités de batterie. L'échangeur de chaleur comporte une partie corps principal définissant au moins une surface de transfert de chaleur primaire. Ce document enseigne un échangeur de chaleur à contre-courant.

Pour former ces circuits, il peut être nécessaire de condamner de façon étanche l'extrémité débouchante vers l'extérieur d'un des canaux d'écoulement d'un de ces circuits. Pour cela, les tôles sont aboutées sur leur pourtour pour être solidarisés de manière étanche.

Un tel échangeur de chaleur à plaques présente l'inconvénient d'exiger un procédé d'assemblage complexe.

La présente invention a pour but de pallier à au moins cet inconvénient précité et de proposer un agencement particulier d'une structure destinée au traitement thermique d'un dispositif de stockage électrique pour véhicule automobile et comportant une plaque d'échange thermique formant un échangeur de chaleur de fabrication simplifiée.

A cet effet, l'invention a pour objet une structure pour le traitement thermique d'un dispositif de stockage électrique d'un véhicule automobile, la structure comportant au moins une plaque d'échange thermique destinée à être en contact du dispositif de stockage électrique et ayant une épaisseur délimitée par deux faces externes, la plaque d'échange thermique comprenant au moins un canal formé en son épaisseur et débouchant par au moins une extrémité dans l'épaisseur de la plaque. Selon l'invention, au niveau de l'extrémité du canal, les faces externes de la plaque d'échange thermique sont séparées l'une de l'autre d'une distance inférieure à l'épaisseur.

La distance mesurée entre ces deux faces externes est donc inférieure à l'épaisseur de la plaque d'échange thermique, mesurée selon une direction parallèle celle permettant de mesurer la distance, et prise au droit du canal et en dehors de l'extrémité de ce canal.

Une telle structure est destinée à porter le dispositif de stockage électrique, c'est-à-dire à être l'élément mécanique qui reçoit le poids du dispositif de stockage électrique.

Avantageusement, la structure est une structure métallique. Encore plus avantageusement, la structure est en matière synthétique. Selon l'une de ces variantes, la structure peut être une structure synthétique fibrée carbone.

Le dispositif de stockage électrique est constitué d'un assemblage de modules électriques, eux-mêmes constitués d'un assemblage de cellules électrochimiques. Le dispositif de stockage électrique a pour but l'alimentation d'un moteur électrique. Un véhicule automobile équipé d'un tel dispositif de stockage électrique peut être mu par la force électromotrice du ou des moteurs électriques auxquels il est couplé.

Le canal est formé dans l'épaisseur de la plaque d'échange thermique. C'est ce qui distingue la plaque d'échange thermique de l'invention d'une plaque d'échange thermique formée par deux tôles métalliques embouties et brasées l'une contre l'autre pour délimiter un canal.

La plaque d'échange thermique forme avantageusement un échangeur de chaleur favorisant le traitement thermique du dispositif de stockage électrique. Pour cela, un fluide caloporteur parcourt le canal. Le fluide est alors en échange thermique avec la plaque d'échange thermique. On comprendra alors que la plaque d'échange thermique, par conduction, permet un transfert thermique entre le fluide et le dispositif de stockage électrique.

Au niveau de l'extrémité du canal, le rapprochement des faces externes est réalisé par leur déformation. Ainsi, à l'exception de l'extrémité du canal, l'épaisseur de la plaque d'échange thermique est constante. Un tel rapprochement des faces externes de la plaque d'échange thermique, au niveau de l'extrémité du canal, permet ainsi d'éviter l'apport d'un organe de fermeture pour assurer la fermeture du canal.

Selon une caractéristique de l'invention, l'extrémité du canal est fermée de façon étanche. On comprendra que la fermeture étanche de l'extrémité du canal est opérée après le rapprochement des faces externes de la plaque d'échange thermique au niveau de l'extrémité.

Selon une autre caractéristique de l'invention, le canal comprend des première et deuxième faces internes opposées l'une à l'autre, et, au niveau de l'extrémité, ces première et deuxième faces internes sont séparées d'approximativement 1 millimètre et reliées entre elles par un cordon de soudure.

Selon une autre variante de l'invention, le canal est bordé par des première et deuxième faces internes opposées l'une à l'autre, et, au niveau de l'extrémité, ces première et deuxième faces internes sont en contact l'une de l'autre et reliées entre elles sans apport de matière.

L'étanchéité de l'extrémité du canal est avantageusement réalisée par soudage.

Selon une caractéristique de l'invention, la plaque d'échange thermique est plane. Plus particulièrement, la plaque d'échange thermique est formée par les deux faces externes opposées l'une à l'autre. Les deux faces externes de la plaque d'échange thermique délimitent entre elles l'épaisseur de ladite plaque. Cette épaisseur est suffisante pour y former le canal. Par ailleurs, la plaque d'échange thermique s'étend entre au moins deux côtés opposés l'un à l'autre et perpendiculaires auxdites faces externes, le canal étant formé depuis l'un de ces côtés. L'extrémité du canal débouche dans l'un et/ou l'autre de ces côtés.

Selon une caractéristique, la plaque d'échange thermique est obtenue par extrusion de matière.

Selon une caractéristique particulière, l'extrémité du canal est dans un plan distinct d'un plan dans lequel s'étend le côté où est formé l'extrémité du canal.

Avantageusement, le canal est rectiligne. En d'autres termes, le canal s'étend le long d'un axe droit.

Selon une particularité de l'invention, la plaque d'échange thermique est majoritairement en aluminium. Une telle plaque permet alors de réduire le poids de la structure montée sur le véhicule tout en optimisant l'échange de chaleur par conductivité thermique entre le fluide parcourant le canal et le dispositif de stockage électrique. La plaque d'échange thermique est avantageusement en alliage d'aluminium. Encore plus particulièrement, la plaque d'échange thermique est en aluminium. L'intégralité de la structure peut également être en aluminium ou en un alliage d'aluminium.

Selon une variante de réalisation de l'invention, la plaque d'échange thermique comprend deux parois qui bordent le canal, au moins l'une de ces parois, at avantageusement les deux, ayant une épaisseur comprise entre 2 millimètres et 6 millimètres.

De façon particulière, l'épaisseur de la plaque d'échange thermique mesurée, en dehors de l'extrémité du canal, est comprise entre 10 millimètres et 20 millimètres.

Avantageusement, le canal est formé dans une longueur de ladite plaque d'échange thermique. Lorsque la structure comprend cette variante de réalisation, la plaque d'échange thermique est orientée dans sa longueur perpendiculairement à la direction d'avancement du véhicule.

Avantageusement, le canal est formé dans l'épaisseur de la plaque d'échange thermique depuis un premier côté jusqu'à un deuxième côté, le premier côté et le deuxième côté étant opposés l'un à l'autre, le canal débouchant sur chacun de ses côtés par une extrémité.

Selon un mode de réalisation de l'invention, la structure comprend deux plaques d'échange thermique, les plaques d'échange thermique formant ensemble un « T ». Une telle forme en « T » permet à chacune des plaques d'échange thermique d'être en contact de modules électriques du dispositif de stockage électrique sur deux flancs perpendiculaires de celui-ci et optimiser ainsi le traitement thermique du dispositif de stockage électrique, plus particulièrement de ses modules électriques.

Avantageusement, la structure comprend trois plaques d'échange thermique, ces trois plaques d'échange thermique formant ensemble une structure en forme de marche. Cette forme particulière permet de disposer davantage de modules électriques du dispositif de stockage électrique en contact avec au moins une plaque d'échange thermique.

La structure forme avantageusement un élément structurel d'un châssis ou d'une caisse du véhicule. Plus particulièrement, la structure forme un élément structurel d'un soubassement du châssis ou de la caisse du véhicule.

Selon un autre aspect, l'invention a pour objet un système de traitement thermique d'un dispositif de stockage comprenant la structure selon l'une des caractéristiques précédentes et un dispositif de stockage électrique tel que défini précédemment.

Selon un autre aspect, l'invention a pour objet un outil de presse pour la déformation d'une extrémité d'un canal formé entre deux faces externes délimitant une épaisseur d'une plaque d'échange thermique d'une structure selon l'une quelconque des caractéristiques précédentes, Selon l'invention, l'outil comporte un corps, notamment métallique, dans lequel est formé un profil intérieur ouvert comportant deux surfaces planes se rejoignant par l'intermédiaire d'une surface courbe, les surfaces planes étant configurées pour recevoir en correspondance au moins en partie les faces externes de la plaque d'échange thermique de sorte à guider ces dernières vers la surface courbe et les rapprocher l'une de l'autre, au niveau de l'extrémité du canal.

Un tel outil permet la déformation de l'épaisseur de la plaque d'échange thermique, au niveau de l'extrémité, en vue de rapprocher les faces externes de la plaque d'échange thermique l'une de l'autre.

Selon une caractéristique de l'invention, les surfaces planes de l'outil sont prévues pour recevoir, entre elles et sans jeu, les faces externes de ladite plaque. Cette caractéristique permet d'assurer que chacune des faces externes de la plaque d'échange thermique soit guidée par l'outil symétriquement l'une par rapport à l'autre.

Selon un autre aspect, l'invention a pour objet un procédé de déformation d'une extrémité d'un canal formé entre deux faces externes délimitant une épaisseur d'une plaque d'échange thermique d'une structure telle que définie précédemment, le procédé de déformation comprenant une étape de déformation de l'extrémité du canal, au cours de laquelle les faces externes délimitant l'épaisseur de ladite plaque sont rapprochées, au niveau de l'extrémité.

Avantageusement, le rapprochement des faces externes de la plaque d'échange thermique, au niveau de l'extrémité, est réalisé par l'outil décrit dans le présent document.

Encore plus avantageusement, le procédé comprend, préalablement à l'étape de déformation, les étapes suivantes :
- une étape de positionnement de la plaque d'échange thermique, au cours de laquelle la plaque d'échange thermique est positionnée de sorte que l'extrémité du canal soit en regard du profil intérieur ouvert de l'outil ;
- une étape d'accostage de l'outil, au cours de laquelle l'épaisseur de la plaque d'échange thermique est disposée entre les deux surfaces planes du profil intérieur ouvert de l'outil.

Selon une variante de réalisation du procédé de l'invention, dans l'étape de déformation de l'extrémité du canal, les faces externes sont rapprochées, au niveau de l'extrémité, par la surface courbe du profil de l'outil.

Avantageusement, dans l'étape de déformation de l'extrémité de l'extrémité du canal, le rapprochement est réalisé par la mise en pression de l'outil contre l'épaisseur de ladite plaque.

Avantageusement, l'étape de déformation de l'extrémité du canal est réalisée jusqu'à ce que les faces externes soient suffisamment rapprochées l'une de l'autre pour fermer de façon étanche ladite extrémité.

Avantageusement, dans l'étape de déformation de l'extrémité du canal, au niveau de l'extrémité, des faces internes du canal sont rapprochées jusqu'à être distantes l'une de l'autre d'approximativement 1 millimètre.

Quelle que soit la situation, une étape de soudure peut être mise en oeuvre pour souder l'extrémité du canal une fois les faces externes rapprochées.

D'autres caractéristiques, détails et avantages de l'invention ressortiront plus clairement à la lecture de la description donnée ci-après à titre indicatif en relation avec des dessins dans lesquels :
- la figure 1 est une vue en coupe et en perspective d'une structure selon un premier mode de réalisation de l'invention, sur laquelle sont montés des modules électriques d'un dispositif de stockage électrique pour véhicule automobile,
- la figure 2 est une vue en perspective d'une plaque d'échange thermique comportant deux canaux, l'un des canaux est représenté découpé pour mieux illustrer le rapprochement de faces externes de la plaque au niveau de son extrémité en vue de sa fermeture et l'autre canal est représenté ouvert pour mieux illustrer l'extrémité d'un canal avant sa fermeture,
- la figure 3 est une vue latérale de la figure 2 représentant le canal découpé,
- la figure 4 illustre une structure selon un deuxième mode de réalisation,
- la figure 5 illustre une vue en coupe d'un outil de presse permettant une déformation de l'extrémité du canal,
- la figure 6 représente une étape de positionnement de l'outil de la figure 5 par rapport à la plaque d'échange thermique selon le deuxième mode de réalisation,
- la figure 7 représente une étape d'accostage de l'outil de la figure 5 entre deux parois externes de la plaque d'échange thermique de la figure 6,
- la figure 8 représente le retrait de l'outil et l'état des parois externes de la plaque d'échange de chaleur, au niveau de l'extrémité du canal, ceci après qu'une étape de déformation de ces dernières ait été réalisée,
- la figure 9 représente la plaque d'échange thermique dont chaque canal est fermé à son extrémité.

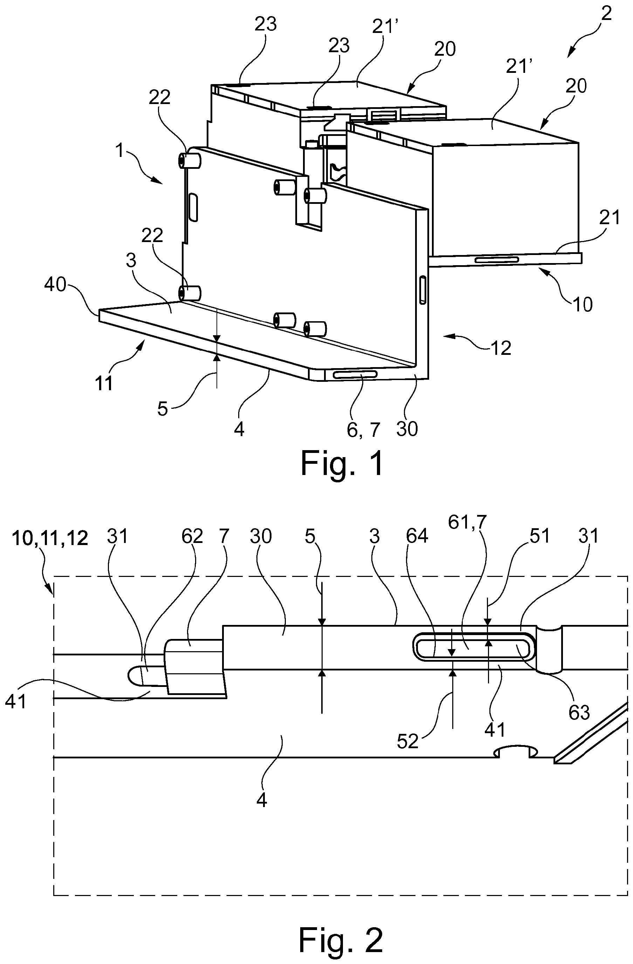

Tel qu'illustré à la figure 1, on a représenté une structure 1 selon un premier mode de réalisation de l'invention. La structure 1 est représentée selon une vue en coupe à l'extrémité droite de la structure 1. La structure 1 comporte une pluralité de plaques d'échange thermique 10, 11, 12, ici trois plaques d'échange thermique 10, 11, 12 de forme plane, appelées ci-après plaques, formant ensemble une structure en forme de marche. Une telle structure 1 est avantageusement venue de matière, c'est-à-dire unitaire. Préférentiellement, la structure 1 est majoritairement en aluminium. Encore plus préférentiellement, la structure 1 est en alliage d'aluminium. Parmi ces trois plaques d'échange thermique 10, 11, 12, des première et deuxième plaques d'échange thermique 10, 11 sont disposées dans des plans distincts en étant parallèles entre elles, alors qu'une troisième plaque 12 d'échange thermique relie mécaniquement la première plaque 10 d'échange thermique à la deuxième plaque 11 d'échange thermique l'une à l'autre. La troisième plaque d'échange thermique 12 s'étend par exemple dans un plan perpendiculaire au plan de la première plaque d'échange thermique 10 et/ou au plan de la deuxième plaque d'échange thermique 11.

Une telle structure 1 est destinée à porter un dispositif de stockage électrique 2 constitué d'un assemblage de modules électriques 20, eux-mêmes constitués d'un assemblage de cellules électrochimiques. Un tel dispositif de stockage électrique 2 a pour but l'alimentation d'au moins un moteur électrique qui assure la mise en mouvement du véhicule automobile. On comprendra qu'un véhicule automobile équipé d'un tel dispositif de stockage électrique 2 peut être mu par la force électromotrice du ou des moteurs électriques auxquels il est couplé.

Au moins une plaque d'échange thermique 10, 11, 12 forme avantageusement un échangeur de chaleur favorisant le traitement thermique du dispositif de stockage électrique 2.

Pour cela, les modules électriques 20 sont avantageusement disposés sur la structure 1 pour venir en contact thermique des plaques d'échange thermique 10, 11, 12. Ainsi, tel que cela est représenté, deux modules électriques 20 sont montés sur la première plaque 10 d'échange thermique. Ces deux modules électriques 20 sont avantageusement fixés sur la première plaque 10. A l'état assemblé, au moins une première face 21 de ces modules électriques 20 est plaquée contre la première plaque 10. La troisième plaque 12 d'échange thermique est représentée sans modules électriques 20, ceci pour mieux illustrer des moyens de fixation 22 des modules électriques 20 sur celle-ci. Il est ainsi représenté ces moyens de fixation 22 formés par des plots préalablement montés sur la troisième plaque. Ces plots permettent avantageusement de guider le positionnement de modules électriques 20 contre la troisième plaque 12. Pour maintenir les modules électriques 20 contre leur plaque 10, 12 respective, ces modules électriques 20 comprennent des ouvertures traversantes 23 depuis une deuxième face 21' de ces modules électriques 20 opposée à la première face 21. Des vis de fixation sont alors insérées depuis cette deuxième face 21' par les ouvertures traversantes 23 pour venir en prise avec des alésages formés dans les plots. Sans que cela soit limitatif, on comprendra que, selon ce premier mode de réalisation, les modules électriques 20 sont montés de façon identique sur la première plaque 10 et sur la troisième plaque 12. Dans cette configuration, la deuxième plaque 11 permet de porter en partie le poids des modules électriques 20 montés sur la troisième plaque 12.

La structure 1 est ici destinée à former un élément structurel d'un châssis ou d'une caisse du véhicule. Plus particulièrement, la structure 1 forme un élément structurel d'un soubassement du châssis du véhicule. La structure 1 peut ainsi former une poutre qui s'étend entre deux longerons du châssis ou entre deux traverses latérales de ce châssis. Il convient de noter qu'à l'état assemblé de la structure 1 sur le véhicule, une première face extérieure 3 de chacune des plaques 10, 11, 12 est dirigée vers l'extérieur du véhicule, alors qu'une deuxième face externe 4 de ces plaques 10, 11, 12, sur laquelle sont posés les modules électriques 20, est dirigée vers l'intérieur du véhicule. En se référant à ce qui précède, on comprendra que la première face externe 3 de la première plaque 10 et de la troisième plaque 12 est en contact d'une face 21 des modules électriques 20 qu'elle porte.

Tel que représenté par la vue en coupe de la figure 1, chaque plaque 10, 11, 12 comporte deux faces externes 3, 4 délimitant son épaisseur 5. Les deux faces externes 3, 4 sont, plus particulièrement, la première face externe 3 et la deuxième face externe 4 définies précédemment.

Par ailleurs, au moins une des plaques 10, 11, 12, et avantageusement chaque plaque 10, 11, 12, comporte un canal 6 formé en son épaisseur 5 et débouchant par au moins une extrémité 7 dans l'épaisseur 5 de la plaque 10, 11, 12. Les deux faces externes 3, 4 de chaque plaque 10, 11, 12 sont elles-mêmes délimitées longitudinalement par au moins deux côtés 30, 40. Il est entendu que l'extrémité 7 du canal 6 débouche sur l'un de ces côtés 30, 40.

Le canal 6 de chaque plaque 10, 11, 12 est rectiligne pour s'étendre le long d'un axe droit dans la longueur de la plaque 10, 11, 12. La plaque 10, 11, 12 comprenant le canal 6 ainsi formé est avantageusement orientée dans sa longueur perpendiculairement à la direction d'avancement du véhicule. Une telle orientation de la plaque 10, 11, 12 perpendiculairement à la direction d'avancement du véhicule permet de limiter l'écrasement du canal 6.

Le canal 6 est parcouru par un fluide caloporteur. Le fluide est alors en échange thermique avec la plaque d'échange thermique 10, 11, 12. On comprendra alors que la plaque d'échange thermique 10, 11, 12 permet un transfert thermique entre le fluide et des modules électriques 20 du dispositif de stockage électrique 2.

Il convient de noter que les plaques d'échange thermique 10, 11, 12 ne sont pas limitées en ce qu'elle comporte un seul canal 6. Au moins l'une quelconque de ces plaques d'échange thermique 10, 11, 12 peut comprendre plus d'un canal 6 tel que décrit.

A la figure 2, on a représenté l'une quelconque des plaques d'échange thermique 10, 11, 12 prise isolement de la structure 1, ceci afin de mieux représenter le concept inventif de la présente invention.

De la même façon, la plaque d'échange thermique 10, 11, 12 est plane et délimite une épaisseur 5 entre deux faces externes 3, 4. La plaque 10, 11, 12 comporte ici deux canaux 61, 62, à savoir un premier canal 61 et un deuxième canal 62, formés en son épaisseur 5. On comprendra que les deux canaux 61, 62 sont ménagés entre les deux faces externes 3, 4. Ces deux canaux 61, 62 débouchent par au moins une extrémité 7 sur au moins un côté 30 de la plaque 10, 11, 12, ce côté 30 de la plaque 10, 11, 12 étant perpendiculaire aux deux faces externes 3, 4. A titre d'exemple, la ou les plaques 10, 11, 12 et les canaux 61, 62 sont obtenus par extrusion de matière. Lorsqu'ils sont formés, ces canaux 61, 62 délimitent dans l'épaisseur 5 de la plaque 10, 11, 12 les deux parois 31, 41.

Au niveau du deuxième canal 62, la plaque 10, 11, 12 comporte deux parois 31, 41, à savoir une première paroi 31 et une deuxième paroi 41, qui bordent le canal 62. L'épaisseur 5 de la plaque 10, 11, 12 est alors formée par une épaisseur 51, 52 de chaque paroi 31, 41 et par le canal 62 lui-même. Selon ce mode de réalisation, l'épaisseur 5 des plaques 10, 11, 12 est comprise entre 10 millimètres et 20 millimètres. Plus particulièrement, l'épaisseur 51, 52, situées de part et d'autre, du canal 62 est comprise entre 2 millimètres et 6 millimètres.

Les parois 31, 41 bordant le canal 62 sont délimitées par les faces externes 3, 4 de la plaque 10, 11, 12 et par des première et deuxième faces internes 63, 64, opposées l'une à l'autre par rapport au canal 62. Ainsi, l'épaisseur 51 de la première paroi 31 est délimitée par la première face externe 3 et la première face interne 63 et l'épaisseur 52 de la deuxième paroi 41 est délimitée par la deuxième face externe 4 et la deuxième face interne 64.

Le premier canal 61 est représenté ouvert avant sa fermeture, alors que le deuxième canal 62 est représenté après sa fermeture et sectionné. En ce que concerne plus particulièrement le deuxième canal 62, sa représentation sectionnée permet d'illustrer l'intérieur du deuxième canal 62 et l'extérieur de ce deuxième canal 62, au niveau de sa fermeture.

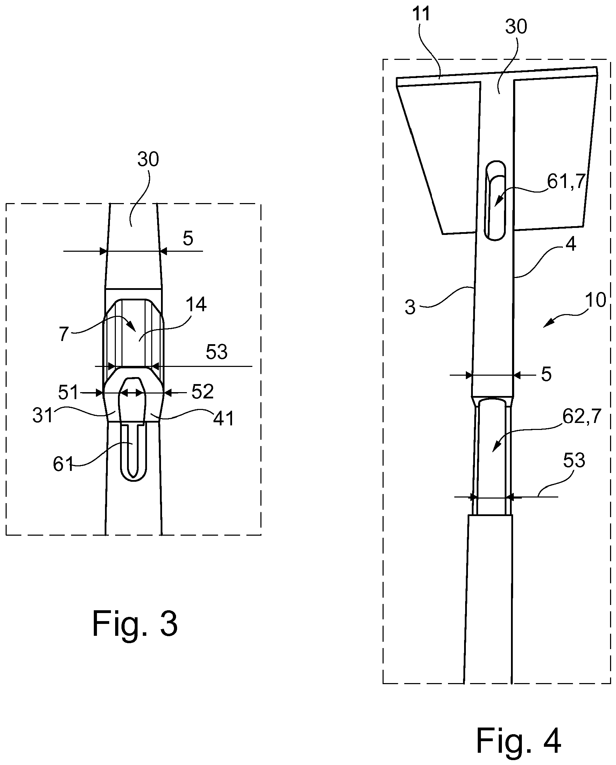

La fermeture du deuxième canal 62 est réalisée, au niveau de son extrémité 7, par le rapprochement des deux faces externes 3, 4 l'une de l'autre de sorte à être comprises dans l'épaisseur 5 de la plaque 10, 11, 12. En d'autres termes et tel que cela est représenté à la figure 3, lorsque les faces externes 3, 4 sont rapprochées l'une de l'autre, au niveau de l'extrémité 7 du deuxième canal 62, d'une distance 53 inférieure à l'épaisseur 5. On comprendra alors qu'une épaisseur totale 53 prise entre les faces externes 3, 4 est inférieure à l'épaisseur 5 de la plaque 10, 11, 12.

Au niveau de l'extrémité 7 du deuxième canal 62, le rapprochement des faces externes 3, 4 est réalisé par leurs déformations. Ainsi, à l'exception de l'extrémité 7 du canal 6 ou des premier ou deuxième canaux 61, 62, l'épaisseur 5 de la plaque 10, 11, 12 reste constante. Un tel rapprochement des faces externes 3, 4 de la plaque 10, 11, 12 au niveau de l'extrémité 7 du deuxième canal 62 permet ainsi d'éviter l'apport d'un organe de fermeture pour assurer la fermeture de ce deuxième canal 62. En outre, il convient de noter que la déformation des parois 31, 41 permettant le rapprochement des faces externes 3, 4, au niveau de l'extrémité 7, a pour conséquence de placer l'extrémité 7 du deuxième canal 62 dans un plan distinct d'un côté 30, 40 de la plaque 10, 11, 12 depuis laquelle elle est formée.

Dans cet état rapproché des faces externes 3, 4, l'extrémité 7 du deuxième canal 62 est fermée de façon étanche. Pour cela, au niveau de l'extrémité 7, les faces externes 3, 4 sont suffisamment rapprochées jusqu'à être distantes l'une de l'autre pour pouvoir rendre étanche l'extrémité 7. Avantageusement, les faces externes 3, 4 sont alors rapprochées l'une de l'autre en laissant un espace d'approximativement 1 millimètre entre les deux parois 31, 41. L'étanchéité est, par exemple, réalisée par soudage. Plus particulièrement, un cordon de soudure 14 peut être prévu pour fermer de façon étanche le deuxième canal 62 au niveau de cette extrémité 7.

La fermeture étanche peut toutefois être réalisée par électrosoudage sans apport de matière. Pour cela, les parois 31, 41 sont mises en contact l'une de l'autre au niveau de l'extrémité 7.

Tel que représenté à la figure 4, la structure 1 comprend deux plaques d'échange thermique 10, 11, les plaques d'échange thermique 10, 11 formant ensemble un « T ». Une telle forme permet à chacune des plaques d'échange thermique 10, 11 d'être en contact de modules électriques 20 du dispositif de stockage électrique 2 et d'optimiser ainsi le traitement thermique des modules électriques 20 qu'elles portent. On comprendra que la plaque d'échange de chaleur référencée 11 peut comprendre un canal 6 ou plusieurs canaux 61, 62.

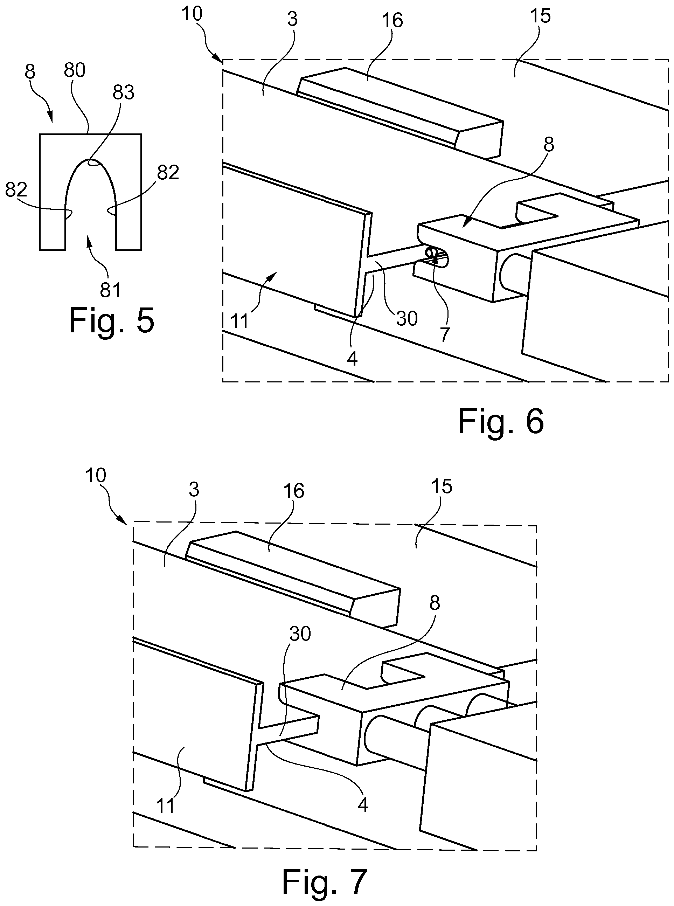

Pour permettre un tel rapprochement des faces externes 3, 4 tel que défini précédemment, il est utilisé un outil 8 de presse qui est représenté à la figure 5. Cet outil 8 de presse est monté sur une presse pouvant exercer plusieurs tonnes sur la partie de la plaque d'échange thermique 10, 11, 12 qu'elle doit conformer, la plaque 10, 11, 12 étant selon l'un quelconque des premier ou deuxième modes de réalisation.

L'outil 8 comporte un corps 80 dans lequel est formé un profil intérieur ouvert 81 comportant deux surfaces planes 82 se rejoignant par l'intermédiaire d'une surface courbe 83, les surfaces planes 82 étant configurées pour recevoir en correspondance au moins en partie les faces externes 3, 4 de la plaque d'échange thermique 10, 11, 12 au niveau de l'extrémité 7 du canal 6. Lorsque la plaque 10, 11, 12 est reçue dans l'outil 8, les faces externes 3, 4 de la plaque 10, 11, 12 sont maintenues sans jeu entre les surfaces planes 82. Les surfaces planes 82 de l'outil 8 sont prévues pour guider l'extrémité 7 vers la surface courbe 83. Lorsque l'extrémité 7 du canal 6 arrive au niveau de la surface courbe 83 de l'outil 8, les deux faces externes 3, 4 de la plaque 10 se déforment en épousant la forme de la surface courbe 83 jusqu'à arriver au sommet de la surface courbe 83. A ce sommet de la surface courbe 83, les deux parois 31, 41 délimitant le canal 6 sont rapprochées l'une de l'autre pour être séparées d'approximativement 1 millimètre, ou bien en contact l'une de l'autre, en fonction du mode fermeture envisagé. A partir du sommet de la surface courbe 83, l'extrémité 7 du canal 6 est pressée par l'outil 8 pour être pliée et ainsi maintenir la déformation des parois de la plaque 10, 11, 12 à cette extrémité 7.

Le rapprochement des faces externes de la plaque 10, 11, 12, au niveau de l'extrémité 7, est réalisé par un procédé de déformation. Ce procédé comporte une étape de déformation de l'extrémité 7 du canal 6, au cours de laquelle les faces externes 3, 4 délimitant l'épaisseur 5 de la plaque 10, 11, 12 sont rapprochées au niveau de l'extrémité 7 du canal 6.

Lorsque le procédé est réalisé par un outil 8 de presse tel que décrit précédemment, au cours de cette étape de déformation, les faces externes 3, 4 de la plaque 10, 11, 12 vont épouser la forme de la surface courbe 83 jusqu'à atteindre son sommet.

Tel que représenté à la figure 6, le procédé peut comprendre, dans une première étape antérieure à l'étape de déformation, une étape de positionnement de la plaque d'échange thermique 10, au cours de laquelle la plaque d'échange thermique 10 est positionnée de sorte que l'extrémité 7 d'un des canaux 6 soit en regard du profil intérieur ouvert 81 de l'outil 8. La plaque 10, 11, 12 est avantageusement disposée sur un plateau 15 en butée contre une cale 16.

A la figure 7, successivement à cette étape de positionnement, dans une deuxième étape, le procédé comprend une étape d'accostage de l'outil 8, au cours de laquelle l'épaisseur 5 de la plaque d'échange thermique 10 est disposée entre les deux surfaces planes 82 du profil intérieur ouvert 81 de l'outil 8. L'outil 8 est alors avancé pour guider les faces externes de la plaque 10 vers la surface courbe 83, tel que cela a été décrit précédemment.

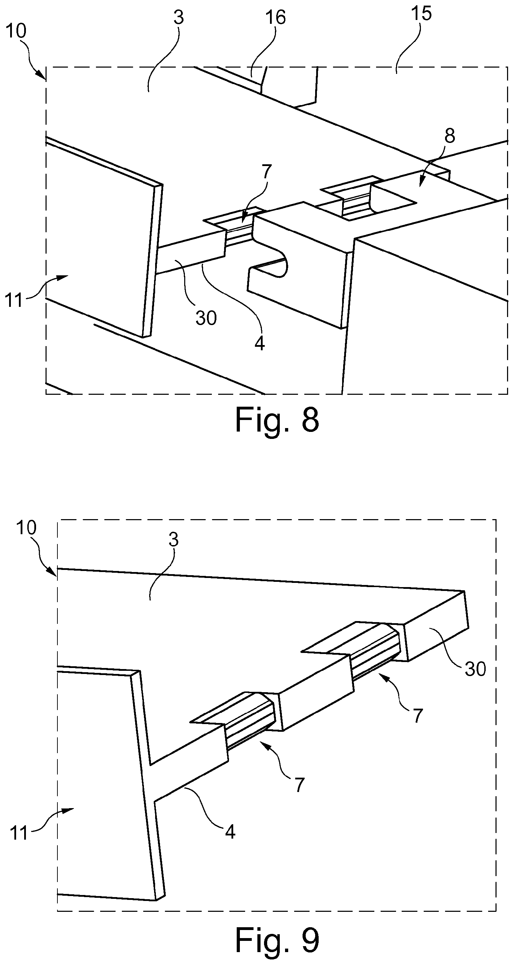

La figure 8 illustre le retrait de l'outil 8 suite à l'étape de déformation de l'extrémité 7 du canal 6 qui est réalisée jusqu'à ce que les faces externes soient suffisamment rapprochées l'une de l'autre pour fermer de façon étanche ladite extrémité 7.

La figure 9 représente la plaque 10 dans laquelle, au niveau de chaque extrémité 7, les faces 3, 4 de la plaque 10 sont rapprochées l'un de l'autre. On comprendra par ailleurs que l'outil 8 peut être avantageusement conçu pour fermer simultanément l'extrémité 7 de plusieurs canaux 6 sur un même côté 30 de la plaque 10.

Bien entendu, les caractéristiques, les variantes et les différentes formes de réalisation de la structure et/ou de ses plaques d'échange thermique peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique.

## Revendications

1. Structure (1) pour le traitement thermique d'un dispositif de stockage électrique (2) d'un véhicule automobile, la structure (1) comportant au moins une plaque d'échange thermique (10, 11, 12) destinée à être en contact du dispositif de stockage électrique (2) et ayant une épaisseur (5) délimitée par deux faces externes (3, 4), la plaque d'échange thermique (10, 11, 12) comprenant au moins un canal (6, 61, 62) formé en son épaisseur (5) et débouchant par au moins une extrémité (7) dans l'épaisseur (5) de la plaque d'échange thermique (10, 11, 12), **caractérisé en ce que**, au niveau de l'extrémité (7) du canal (6, 61, 62), les faces externes (3, 4) de la plaque d'échange thermique (10, 11, 12) sont séparées l'une de l'autre d'une distance (53) inférieure à l'épaisseur (5).

2. Structure (1) selon la revendication précédente, **caractérisée en ce qu'**elle est destinée à porter le dispositif de stockage électrique (2).

3. Structure (1) selon l'une quelconque des revendications précédentes, **caractérisée en ce que** l'extrémité (7) du canal (6, 61, 62) est fermée de façon étanche.

4. Structure (1) selon l'une quelconque des revendications précédentes, **caractérisée en ce que** le canal (6) est délimité par des première et deuxième faces internes (63, 64) opposées l'une à l'autre, et **en ce que**, au niveau de l'extrémité (7), ces première et deuxième faces internes (63, 64) sont séparées d'1 millimètre et reliées entre elles par un cordon de soudure (14).

5. Structure (1) selon l'une quelconque des revendications précédentes, **caractérisée en ce que** la plaque d'échange thermique (10, 11, 12) est obtenue par extrusion de matière.

6. Structure (1) selon l'une quelconque des revendications précédentes, **caractérisée en ce que** la plaque d'échange thermique (10, 11, 12) est majoritairement en aluminium.

7. Structure (1) selon l'une quelconque des revendications précédentes, dans laquelle la plaque d'échange thermique (10, 11, 12) comprend deux parois (31, 41) qui bordent le canal (6, 61, 62), au moins l'une de ces parois (31, 41) ayant une épaisseur (5) comprise entre 2 millimètres et 6 millimètres.

8. Structure (1) selon l'une quelconque des revendications précédentes, **caractérisée en ce qu'**elle comprend trois plaques d'échange thermique (10, 11, 12), les plaques d'échange thermique (10, 11, 12) formant ensemble une structure en forme de marche.

9. Procédé de déformation d'une extrémité (7) d'un canal (6, 61, 62) formé entre deux faces (3, 4) d'une plaque d'échange thermique (10, 11, 12), la plaque d'échange thermique (10, 11, 12) présentant une épaisseur (5) mesurée entre deux faces externes (31, 41) de la plaque d'échange thermique (10, 11, 12), le procédé de déformation comprenant une étape de déformation de l'extrémité (7) du canal, au cours de laquelle les faces externes (3, 4) délimitant l'épaisseur (5) de ladite plaque sont rapprochées, au niveau de l'extrémité (7).

## Patentansprüche

1. Struktur (1) zur Wärmebehandlung einer elektrischen Speichervorrichtung (2) eines Kraftfahrzeugs, wobei die Struktur (1) mindestens eine Wärmetauschplatte (10, 11, 12) umfasst, die dazu bestimmt ist, mit der elektrischen Speichervorrichtung (2) in Kontakt zu sein, und eine Dicke (5) hat, die durch zwei Außenflächen (3, 4) begrenzt wird, wobei die Wärmetauschplatte (10, 11, 12) mindestens einen Kanal (6, 61, 62) umfasst, der in ihrer Dicke (5) gebildet ist und durch mindestens ein Ende (7) in der Dicke (5) der Wärmetauschplatte (10, 11, 12) mündet, **dadurch gekennzeichnet, dass**, auf Höhe des Endes (7) des Kanals (6, 61, 62), die Außenflächen (3, 4) der Wärmetauschplatte (10, 11, 12) voneinander um einen Abstand (53) getrennt sind, der geringer als die Dicke (5) ist.

2. Struktur (1) nach dem vorhergehenden Anspruch, **dadurch gekennzeichnet, dass** sie dazu bestimmt ist, die elektrische Speichervorrichtung (2) zu tragen.

3. Struktur (1) nach einem der vorhergehenden Ansprüche, **dadurch gekennzeichnet, dass** das Ende (7) des Kanals (6, 61, 62) dicht verschlossen ist.

4. Struktur (1) nach einem der vorhergehenden Ansprüche, **dadurch gekennzeichnet, dass** der Kanal (6) durch erste und zweite Innenflächen (63, 64) begrenzt wird, die entgegengesetzt zueinander sind, und dass, auf Höhe des Endes (7), diese ersten und zweiten Innenflächen (63, 64) um 1 Millimeter getrennt sind und untereinander durch eine Schweißnaht (14) verbunden sind.

5. Struktur (1) nach einem der vorhergehenden Ansprüche, **dadurch gekennzeichnet, dass** die Wärmeaustauschplatte (10, 11, 12) durch Materialextrusion erhalten wird.

6. Struktur (1) nach einem der vorhergehenden Ansprüche, **dadurch gekennzeichnet, dass** die Wärmetauschplatte (10, 11, 12) überwiegend aus Aluminium ist.

7. Struktur (1) nach einem der vorhergehenden Ansprüche, bei der die Wärmetauschplatte (10, 11, 12) zwei Wände (31, 41) umfasst, die den Kanal (6, 61, 62) säumen, wobei mindestens eine dieser Wände (31, 41) eine Dicke (5) zwischen 2 Millimeter und 6 Millimeter hat.

8. Struktur (1) nach einem der vorhergehenden Ansprüche, **dadurch gekennzeichnet, dass** sie drei Wärmetauschplatten (10, 11, 12) umfasst, wobei die Wärmetauschplatten (10, 11, 12) zusammen eine stufenförmige Struktur bilden.

9. Verfahren zum Verformen eines Endes (7) eines Kanals, (6, 61, 62), der zwischen zwei Flächen (3, 4) einer Wärmetauschplatte (10, 11, 12) gebildet ist, wobei die Wärmetauschplatte (10, 11, 12) eine zwischen zwei Außenflächen (31, 41) der Wärmetauschplatte (10, 11, 12) gemessene Dicke (5) aufweist, wobei das Verfahren zum Verformen einen Schritt des Verformens des Endes (7) des Kanals umfasst, in dessen Verlauf die Außenflächen (3, 4), die die Dicke (5) der Platte begrenzen, auf Höhe des Endes (7) angenähert werden.

## Claims

1. Structure (1) for the heat treatment of an electrical storage device (2) for a motor vehicle, the structure (1) including at least one heat exchange plate (10, 11, 12) intended to be in contact with the electrical storage device (2) and having a thickness (5) defined by two external faces (3, 4), the heat exchange plate (10, 11, 12) comprising at least one channel (6, 61, 62) formed in its thickness (5) and opening at at least one end (7) into the thickness (5) of the heat exchange plate (10, 11, 12), **characterized in that**, at the level of the end (7) of the channel (6, 61, 62), the external faces (3, 4) of the heat exchange plate (10, 11, 12) are separated from one another by a distance (53) less than the thickness (5).

2. Structure (1) according to the preceding claim, **characterized in that** it is intended to support the electrical storage device (2).

3. Structure (1) according to either one of the claims, **characterized in that** the end (7) of the channel (6, 61, 62) is closed in a sealed manner.

4. Structure (1) according to any one of the preceding claims, **characterized in that** the channel (6) is defined by opposite first and second internal faces (63, 64) and **in that**, at the level of the end (7), these first and second internal faces (63, 64) are separated by 1 millimetre and interconnected by a weld bead (14).

5. Structure (1) according to any one of the preceding claims, **characterized in that** the heat exchange plate (10, 11, 12) is produced by extrusion of material.

6. Structure (1) according to any one of the preceding claims, **characterized in that** the heat exchange plate (10, 11, 12) is mostly made of aluminium.

7. Structure (1) according to any one of the preceding claims, in which the heat exchange plate (10, 11, 12) comprises two walls (31, 41) that border the channel (6, 61, 62), at least one of these walls (31, 41) having a thickness (5) between 2 millimetres and 6 millimetres inclusive.

8. Structure (1) according to any one of the preceding claims, **characterized in that** it comprises three heat exchange plates (10, 11, 12), the heat exchange plates (10, 11, 12) together forming a step-shaped structure.

9. Method for deformation of an end (7) of a channel (6, 61, 62) formed between two faces (3, 4) of a heat exchange plate (10, 11, 12), the heat exchange plate (10, 11, 12) having a thickness (5) measured between two external faces (31, 41) of the heat exchange plate (10, 11, 12), the deformation method comprising a step of deformation of the end (7) of the channel during which the external faces (3, 4) defining the thickness (5) of said plate are brought closer to one another at the level of the end (7).
